# EUROPÄISCHE PATENTSCHRIFT

(11) **EP 0 428 077 B1**
(45) Veröffentlichungstag und Bekanntmachung des Hinweises auf die Patenterteilung: **03.03.1993**
(21) Anmeldenummer: 90121454.4
(22) Anmeldetag: 09.11.1990
(51) Int. Cl.: E06B 3/96, E06B 7/23, B29C 65/02

(54) **Verfahren zur Verbindung von Kunststoff-Fensterprofilen mit anextrudierten Dichtungen**
Assembling method for plastic window profile members with co-extruded sealing joints
Procédé d'assemblage de profilés pour fenêtres en matière plastique avec joints d'étanchéité co-extrudés

(30) Priorität: 14.11.1989 IT 486589
(43) Veröffentlichungstag der Anmeldung: 22.05.1991
(73) Patentinhaber: FINSTRAL S.P.A., I-39050 Renon Auna di Sotto, Bolzano (IT)
(72) Erfinder: Oberrauch, Hans, I-39050 Renon (Bolzano) (IT)
(74) Vertreter: Oberosler, Ludwig

(56) Entgegenhaltungen:
- EP-A- 0 036 286
- DE-A- 2 328 357
- DE-A- 3 039 733
- DE-A- 3 318 684
- DE-C- 3 405 384
- DE-U- 8 619 147
- GB-A- 2 103 692
- GB-A- 2 177 442
- NL-A- 7 211 692

## Beschreibung

Es ist aus der NL-A-7211692 (WAWIN) die Fertigung von Kunsstoffprofilen bekannt an welchen, während des Extrusionsverfahrens oder in einem folgendem Arbeitsverfahren elastische Dichtungen angeformt werden; diese Dichtungen weisen jedoch den Nachteil auf, daß sie an den Verbindungsstellen durch Verschweißen bei der Herstellung von Rahmen von Fensterflügeln und/oder -stöcken, durch Anhäufung des Materials und Elastizitätseinbuße Schwachstellen in der Abdichtung darstellen.

Weiters ist aus der GB-A-2177442 (HAKKERS) bekannt, eine Dichtungslippe an einem Fensterrahmenprofil so vorzusehen, daß sie sich bei geschlossenem Fensterflügel elastisch an das Stockprofil anlegt, diese Dichtungslippen werden allgemein aus dem selben Material des Rahmenprofils und in einem einzigen normalen Extrusionsverfahren geformt, haben aber den Nachteil, daß ihre Anschmiegsamkeit, besonders bei niedrigen Temperaturen zu wünschen läßt. Ein weiterer Nachteil besteht darin, daß bei der Stumpfverschweißung der Rahmenprofile die Schweißwulst durch Ausfüllen des schmalen Zwischenraumes zwischen Dichtungslippe und Profilwand diese beide Teile verschweißt und daß dadurch die Dichtungslippe an diesen Stellen ihre Elastizität vollkommen einbüßt.
Während des Verschweißens von zwei Profilen mit anextrudierten Dichtungen bilden sich, infolge Anpressen der vorher erwärmten, deckungsgleichen Profilflächen der beiden zu verbindenden Teile, sei es an den Verbindungsflächen der Profile als auch an denen der Dichtungen, Materialanhäufungen. Während diese Materialanhäufungen an jenen Stellen des Profils, welche nicht von den Dichtungen überdeckt sind, verhältnismäßig problemlos beseitigt werden können, birgt die Beseitigung der Materialanhäufung unter den Dichtungen und an den Dichtungen selbst Schwierigkeiten und wird deshalb vielfach nicht durchgeführt, was allerdings an den entsprechenden Stellen zu Dichtungsschwachstellen wegen mangelnder Elastizität und vergrößertem Querschnitt führt.
Aus der DE-A-3039733 (Geb.KÖMMERLING) ist bereits bekannt die Materialanhäufung an Schweißnähten von stumpfverschweißten Kunststoffprofilen durch, in die Profilquerwände gefräste Kanäle und Vertiefungen aufzunehmen, sodaß an den Sichtflächen keine Materialwülste sichtbar werden; weil diese in die Ausfräsungen entweichen können. Dieses Verfahren aber löst nicht das Problem der Materialanhäufung an den Schweißstellen der anextrudierten und somit mitverschweißten Dichtungen.
Das Verfahren und die Vorrichtung gemäß der DE-C-3405384 (SKS - STAKUSIT - STAHL - KUNSTSTOFF) sieht zwar, vor dem Verschweißen der Profile, bei deren Zusammenführung, ein Zurückstauchen der Dichtungen vor; diese legen sich zwar nach dem Schweißvorgang wieder durch Entlastung gegeneinander, sind aber nicht verschweißt und können nicht am Profil anextrudiert sein.
Die Erfindung stellt sich die Aufgabe ein Verfahren zur Verbindung von Kunststoff-Fensterprofilen und dergleichen mit anextrudierten Dichtungen zu schaffen, welches eine kostengünstige Fertigung der Rahmen und die elastische Anpassung sowie die Funktion der Dichtungen, insbesondere an den Verbindungsstellen, sicherstellt. Erfindungsgemäß wird diese Aufgabe dadurch gelöst, daß an den zu verschweißenden Profilen im Bereich der Sitze der Dichtungen eine teilweise oder totale Ausfräsung der Profilwand erfolgt und daß die Dichtungen gleichzeitig mit den Profilen und durch dieselbe Schweißvorrichtung verbunden werden.

Es besteht die Möglichkeit, die Verarbeitung der Profile zu rationalisieren, indem außer den inneren Dichtungen und den Dichtungen für den Sitz der Scheibe auch die Zwischendichtung, wie aus der DE-U -8 619 147 bekannt, an ein und demselben Profil (Flügel) vorgesehen ist.
Um infolge der Schweißverbindung die Materialanhäufung am Profil, in den Bereichen der Verbindung der Dichtungen, zu verhindern, wird erfindungsgemäß die Profilwand im Bereich des Dichtungssitzes, ohne die Dichtung zu beschädigen, vor dem Erwärmen der Schweißflächen, von der Profilstirnseite her abgefräst. Das Abfräsen kann derart sein, daß entsprechend dem Dichtungsquerschnitt die gesamte Profilwand oder nur ein Teil dieser abgefräst wird, wodurch in diesem Bereich die Materialanhäufung vorweggenommen wird oder derart vermindert wird, daß eine kleine Ausnehmung bestehen bleibt, in welche die Dichtungsverbindung elastisch ausweichen kann ohne die Funktion der Dichtung zu beeinträchtigen und gegen welche, gegebenenfalls während des Schweißprozesses, die teigige Masse der Materialanhäufung der Dichtung ausweichen kann, wenn an der entgegensetzten Seite der Dichtung eine Formfläche vorgesehen wird, welche an der Dichtungsanlegefläche die Ausformung von Vorsprüngen oder Wülsten durch Materialanhäufung verhindern soll.

Die Erfindung wird nachstehend anhand eines in der beigelegten Zeichnung dargestellten vorzuziehenden Ausführungsbeispieles von erfindungsgemäß verschweißten Kunststoff-Fensterprofilen mit anextrudierten Dichtungen näher erklärt, wobei die Zeichnung nur erklärenden und nicht begrenzenden Zweck hat.

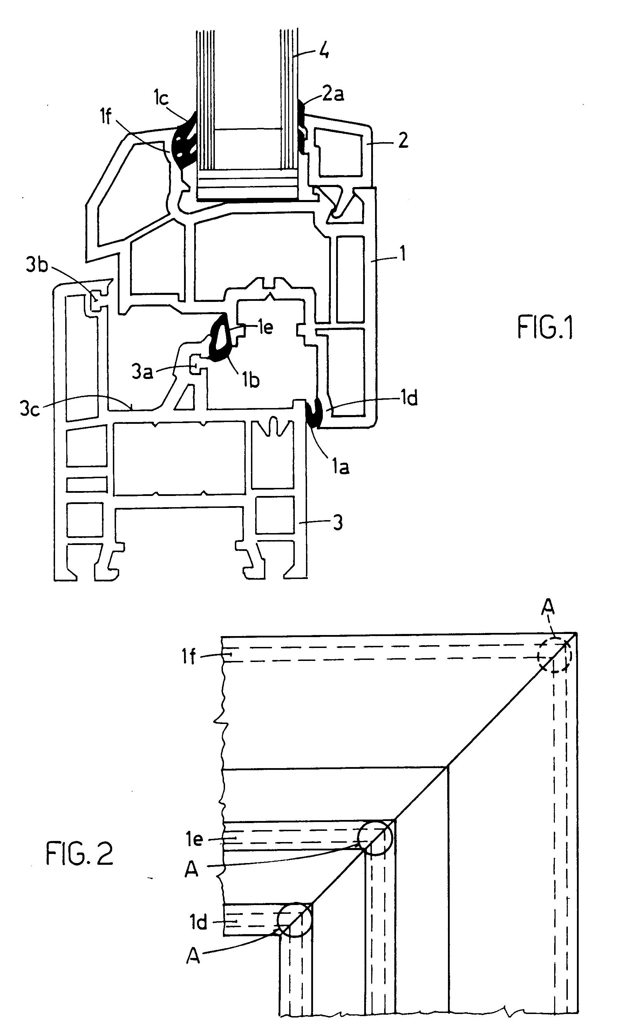

Die Fig.1 zeigt einen Querschnitt durch die erfindungsgemäßen Profile eines Fensterflügelrahmens und eines Fenterstockes.
Die Fig.2 zeigt im Detail die Eckverbindung der Profile des Flügelrahmens von der Seite der Dichtungssitze her mit den erfindungsgemäßen Ausfräsungen im Verbindungsbereich der Dichtungen.
Das Profil 1 des Flügelrahmens weist gegen das Profil 3 des Stockrahmens Sitze 1d, 1e für die Anbringung, in Coextrusion oder in einem der Profilextrusion folgenden Arbeitsgang, von Dichtungen 1a, 1b auf; eine weitere Dichtung 1c ist am Sitz 1f vorgesehen und gegen die Glasscheibe 4 gerichtet, welche in ihrem Sitz in bekannter Weise durch die gleichfalls mit Dichtung 2a versehene Glasleiste 2 befestigt ist.
Dadurch daß das Profil 1 des Flügelrahmens, wie aus der DE-U-8 619 147 bekannt, mit sämtlichen Dichtungen 1a, 1b, 1c versehen wird, ist das Profil 3 des Stockrahmens frei von Dichtungen, wodurch sich weniger Aufwand bei der Verarbeitung, der Montage und dem Betrieb ergibt. Das Profil 3 des Stockrahmens kann jedoch auch bekannte Rillen 3a, 3b für die Nachrüstung traditioneller Dichtungen im Falle von Beschädigung der anextrudierten Dichtungen 1a, 1b auf.
Am Profil 3 des Stockrahmens kann eine traditionelle. Schweißverbindung erfolgen, während am Profil 1 des Flügelrahmens, welches mit sämtlichen erforderlichen Dichtungen 1a, 1b, 1c ausgestattet ist, erfindungsgemäß im Bereich der Dichtungsverbindungsstelle, am Sitz 1d, 1e, 1f der Dichtungen, die Profilwand in ihrer gesamten Stärke oder teilweise, von der Profilstirnseite her, ohne die Dichtungen selbst zu beschädigen, ausgefräst A wird.
Während des Verschweißens des Profils 1 zwecks Fertigung des Flügelrahmens werden gleichzeitig und mittels derselben Vorrichtung auch die Enden der Dichtungen 1a, 1b, 1c verschweißt. Im Bereich der Schweißverbindung der Dichtungen 1a, 1b, 1c wird durch die Ausfräsung A der Profilwand eine Materialanhäufung vorweggenommen beziehungsweise vermindert.
Die Materialanhäufung an der Schweißstelle der Dichtungen 1a, 1b, 1c beeinträchtigt nicht die Wirkung der Abdichtung, da diese elastisch gegen die durch die Ausfräsung A hergestellte Ausnehmung ausweichen kann. Gemäß einer Weiterentwicklung des Erfindungsgedankens kann während der Ausführung der Schweißverbindung an den Dichtungen von der Außenseite her gegen die Schweißnaht eine Formfläche die Ableitung der Materialanhäufung gegen innen, in Richtung Ausfräsung A, bewirken.

## Patentansprüche

1. Verfahren zur Verbindung von Kunststoffprofilen, insbesondere für den Fensterbau und dergleichen, mit anextrudierten oder nachträglich angebrachten Dichtungen, welche,vorzugsweise wie aus der DE-U-8 619 147 bekannt, alle am selben Profil (1 oder 3) vorgesehen sind, dadurch gekennzeichnet, daß an den zu verschweißenden Profilen (1) im Bereich der Sitze (1d,1e,1f) der Dichtungen eine teilweise oder totale Ausfräsung (A) der Profilwand erfolgt und daß die Dichtungen (1d,1e,1f) gleichzeitig mit den Profilen (1) und durch dieselbe Schweißvorrichtung verbunden werden.

2. Verfahren zur Verbindung von Kunststoffprofilen gemäß Patentanspruch 1, dadurch gekennzeichnet, daß während der Verschweißung der Dichtungen (1a,1b,1c) im Bereich der Verbindung dieser Dichtungen von außen her eine Formfläche wirkt, welche die Materialanhäufung gegen die Ausfräsung (A) nach hinten ableitet.

## Claims

1. Method of joining plastics profiles, in particular for window construction and the like, having extruded-on or subsequently attached seals which, preferably as known from DE-U-8 619 147, are all provided on the same profile (1 or 3), characterised in that a partial or total milling-out (A) of the profile wall is performed in the region of the seats (1d, 1e, 1f) of the seals on the profiles (1) to be welded and in that the seals (1d, 1e, 1f) are joined to the profiles (1) at the same time and by the same welding device.

2. Method of joining plastics profiles according to Patent Claim 1, characterised in that, during the welding of the seals (1a, 1b, 1c), there acts from the outside in the region of the joining of these seals a forming area which diverts the material accumulation rearwards towards the milled-out portion (A).

## Revendications

1. Procédé pour assembler des profilés en matière plastique, notamment pour la construction de fenêtres ou équivalents, comprenant des joints venus d'extrusion ou rapportés ultérieurement qui sont tous prévus sur le même profilé (1 ou 3), de préference de la façon connue par le DE-U-8 619 147,
caractérisé en ce que, sur les profilés (1) à souder, dans la région des portées (1d, 1e, 1f), des joints, on procède à un enlèvement (A) partiel ou total de la paroi du profilé par fraisage et en ce que les joints (1d, 1e, 1f) sont assemblés en même temps que les profilés (1) et par le même appareil de soudage.

2. Procédé pour assembler des profilés en plastique selon la revendication 1,
caractérisé en ce que, pendant le soudage des joints (1a, 1b, 1c), une surface de forme qui dévie l'accumulation de matière vers l'arrière, contre la fraisure (A), agit de l'extérieur dans la région de l'assemblage de ces joints.
